# EUROPÄISCHE PATENTSCHRIFT

(11) **EP 3 095 309 B1**
(45) Veröffentlichungstag und Bekanntmachung des Hinweises auf die Patenterteilung: **22.04.2020**
(21) Anmeldenummer: 16168774.4
(22) Anmeldetag: 09.05.2016
(51) Int. Cl.: A01B 59/00

(54) **KUPPLUNGSEINRICHTUNG FÜR EIN LANDWIRTSCHAFTLICHES ANBAUGERÄT**
COUPLING DEVICE FOR AN AGRICULTURAL ATTACHMENT
DISPOSITIF D'ACCOUPLEMENT POUR OUTIL AGRICOLE

(30) Priorität: 13.05.2015 DE 102015208844
(43) Veröffentlichungstag der Anmeldung: 23.11.2016
(73) Patentinhaber: Deere & Company, Moline, IL 61265 (US)
(72) Erfinder: Schibel, Achim, 69123 Heidelberg (DE); Zahn, Werner, 68804 Altlußheim (DE)
(74) Vertreter: Holst, Sönke

(56) Entgegenhaltungen:
- DE-A1- 3 506 670
- DE-A1- 3 739 377
- US-A- 2 674 169

## Beschreibung

Die Erfindung betrifft eine Kupplungseinrichtung für ein landwirtschaftliches Anbaugerät, mit einer Kupplungskugel zur Aufnahme in einem Unterlenkerkuppler eines Dreipunkt-Geräteanbaus, wobei die Kupplungskugel innerhalb gegenüberliegender Haltewangen einer unteren Anbaugerätekupplung befestigt ist.

Eine gattungsgemäße Kupplungseinrichtung für einen Unterlenker eines Dreipunkt-Geräteanbaus geht beispielsweise aus der DE 37 39 377 A1 hervor. Die Kupplungsvorrichtung umfasst einen federbelasteten Verriegelungsmechanismus, der zur lösbaren Aufnahme eines zugehörigen Kugelkörpers in einem anbaugeräteseitigen Anbringungsbereich des Unterlenkers ausgebildet ist.

Derartige Dreipunkt-Geräteanbauten sind im landwirtschaftlichen Bereich zur Anbringung landwirtschaftlicher Anbaugeräte an einem Traktor weit verbreitet. Der üblicherweise im Heckbereich des Traktors angeordnete Dreipunkt-Geräteanbau umfasst zwei in gegenüberliegenden unteren Anlenkpunkten schwenkbar befestigte Unterlenker sowie einen in einem mittigen oberen Anlenkpunkt schwenkbar befestigten Oberlenker, wobei sich die Unterlenker mittels hydraulischer Hubzylinder über zugehörige Hubspindeln anheben bzw. absenken lassen. Sowohl der Oberlenker als auch die beiden Unterlenker sind in der Regel mit Fanghaken ausgestattet, in die sich korrespondierende Kupplungselemente zugehöriger oberer bzw. unterer Anbaugerätekupplungen des landwirtschaftlichen Anbaugeräts mittels zugehöriger Schnellkuppler einrasten lassen. Hierzu umfasst jede der Anbaugerätekupplungen eine Kupplungskugel, die mittels eines Montagebolzens innerhalb gegenüberliegender Haltewangen des Kupplungselements befestigt ist. Die Kupplungskugel bildet zugleich einen Drehpunkt für den daran angebrachten Fanghaken, was es dem zugehörigen Ober- bzw. Unterlenker möglich macht, in gewissem Umfang betriebsbedingten Schwenkbewegungen des angebrachten landwirtschaftlichen Anbaugeräts zur Seite hin zu folgen. Von Nachteil ist, dass es im Bereich des Unterlenkers bereits bei vergleichsweise geringen Schwenkwinkeln zu einem unerwünschten Kontakt des Fanghakens mit den angrenzenden Haltewangen des Kupplungselements kommen kann. Dies gilt insbesondere für den Fall, dass die Kupplungskugel an den Haltewangen unmittelbar anliegt.

Es ist daher Aufgabe der vorliegenden Erfindung, eine bezüglich ihrer seitlichen Verschwenkungsfreiheit verbesserte Kupplungseinrichtung der eingangs genannten Art anzugeben.

Diese Aufgabe wird durch eine Kupplungseinrichtung mit den Merkmalen des Patentanspruchs 1 gelöst.

Die Kupplungseinrichtung für ein landwirtschaftliches Anbaugerät umfasst eine Kupplungskugel zur Aufnahme in einem Unterlenkerkuppler eines Dreipunkt-Geräteanbaus, wobei die Kupplungskugel innerhalb gegenüberliegender Haltewangen einer unteren Anbaugerätekupplung befestigt ist. Erfindungsgemäß sind an gegenüberliegenden Seiten der Kupplungskugel verlaufende Abstandsflansche ausgebildet, die die Kupplungskugel in Abstand zu den Haltewangen halten. Auf diese Weise ist sichergestellt, dass in einem durch die Einbaubreite der Abstandsflansche festgelegten Schwenkwinkelbereich ein unerwünschter Kontakt des Unterlenkerkupplers mit den angrenzenden Haltewangen ausgeschlossen ist, sodass sich die seitliche Verschwenkungsfreiheit der Kupplungseinrichtung durch entsprechende Wahl der Einbaubreite der Abstandsflansche gezielt erhöhen lässt.

Vorteilhafte Ausführungen der erfindungsgemäßen Kupplungseinrichtung gehen aus den Unteransprüchen hervor.

Vorzugsweise sind die Abstandsflansche an der Kupplungskugel fest angebracht. Die Abstandsflansche können integraler Bestandteil der aus einer geeigneten Stahllegierung bestehenden Kupplungskugel sein, wozu diese als einstückiges Drehteil hergestellt wird. Abweichend davon ist auch eine mehrteilige Fertigung möglich, bei der die beiden Abstandsflansche als separate Teile auf einem von der Kupplungskugel umfassten Kugelkörper aufgeschweißt werden.

Im Falle einer mehrteiligen Fertigung können die Abstandsflansche jeweils in Gestalt eines an der Kupplungskugel umlaufenden ringförmigen Bunds ausgebildet sein. Diese sind an gegenüberliegenden Seiten des Kugelkörpers er Kupplungskugel aufgeschweißt.

Die seitliche Verschwenkungsfreiheit der Kupplungseinrichtung lässt sich weiter erhöhen, indem die Abstandsflansche in einem der Kupplungskugel zugewandten Bereich umlaufend verjüngt oder ausgespart sind. Dementsprechend kann der betreffende Bereich als umlaufende Einkerbung oder Nut ausgeformt sein, in die eine angrenzende Außenkontur des Unterlenkerkupplers bei Ausführung von zur Seite hin gerichteten Schwenkbewegungen einzugreifen vermag.

Um einen verschleißbedingten Austausch der Kupplungskugel zu ermöglichen, kann die Kupplungskugel lösbar mittels eines abnehmbaren Montagebolzens an den Haltewangen befestigt sein. Hierzu weisen die Haltewangen sowie die Kupplungskugel miteinander fluchtende Montagebohrungen auf, durch die sich der mittels eines zugehörigen Splints gesicherte Montagebolzen erstreckt.

Typischerweise nehmen die Abstandsflansche zwischen den Haltewangen je nach Kategorie des Dreipunkt-Geräteanbaus jeweils eine Einbaubreite von zumindest 10 bis 15 mm in Anspruch. Im Ergebnis führt dies zu einem gegenüber der Verwendung einer herkömmlichen Kupplungskugel um 10 bis 15° vergrößerten Schwenkwinkelbereich des Unterlenkerkupplers.

Die von der Kupplungskugel zwischen den Haltewangen insgesamt beanspruchte Einbaubreite stimmt dabei idealerweise mit dem Abstand der beiden Haltewangen zueinander überein, sodass die Kupplungskugel im Wesentlichen spielfrei, bevorzugt mittig zwischen den beiden Haltewangen zentriert wird. In letzterem Falle werden die Abstandsflansche derart bemessen, dass diese auf beiden Seiten der Kupplungskugel jeweils dieselbe Einbaubreite zwischen den beiden Haltewangen aufweisen.

Die erfindungsgemäße Kupplungseinrichtung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine dem Stand der Technik entsprechende Kupplungseinrichtung für ein landwirtschaftliches Anbaugerät, und
- Fig. 2: eine beispielhafte Ausführungsform der erfindungsgemäßen Kupplungseinrichtung.

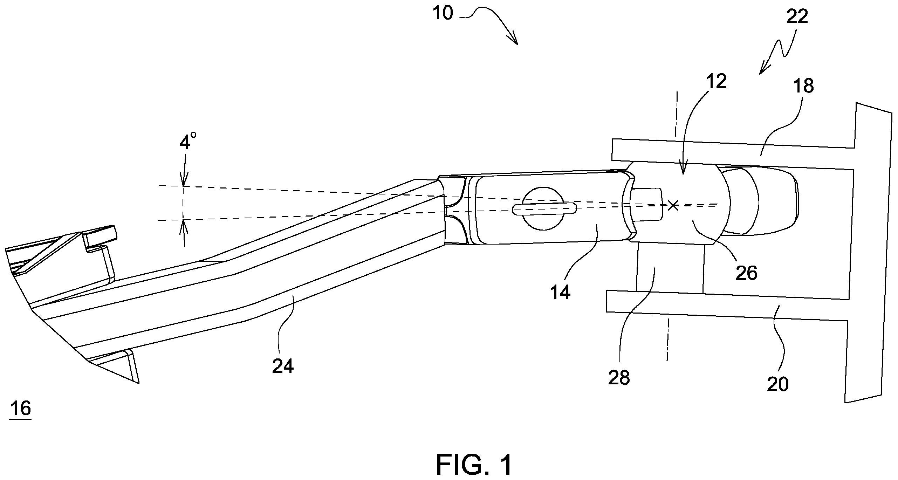

Fig. 1 zeigt eine dem Stand der Technik entsprechende Kupplungseinrichtung für ein landwirtschaftliches Anbaugerät.

Die einem nicht dargestellten landwirtschaftlichen Anbaugerät zugeordnete Kupplungseinrichtung 10 umfasst eine Kupplungskugel 12, die der Aufnahme in einem als Unterlenkerfanghaken 14 ausgebildeten Unterlenkerkupplers eines von einem nicht dargestellten Traktor umfassten Dreipunkt-Geräteanbaus 16 dient, wobei die Kupplungskugel 12 innerhalb gegenüberliegender Haltewangen 18, 20 einer unteren Anbaugerätekupplung 22 befestigt ist. Die Kupplungskugel 12 bildet zugleich einen Drehpunkt für den daran angebrachten Unterlenkerfanghaken 14, was es einem zugehörigen Unterlenker 24 des Dreipunkt-Geräteanbaus 16 möglich macht, in gewissem Umfang betriebsbedingten Schwenkbewegungen des landwirtschaftlichen Anbaugeräts zur Seite hin zu folgen.

Die Kupplungskugel 12 ist von herkömmlicher Bauart, und besteht aus einem jeweils stirnseitig abgeflachten Kugelkörper 26, der mittels eines Montagebolzens 28 zwischen den beiden Haltewangen 18, 20 befestigt ist. Wie in Fig. 1 zu erkennen ist, ist die Kupplungskugel 12 schmaler als der Abstand der beiden Haltewangen 18, 20 zueinander, sodass sich diese zwischen den beiden Haltewangen 18, 20 entlang des Montagebolzens 28 ungehindert hin und her bewegen kann. Im ungünstigsten Fall liegt der Unterlenkerfanghaken 14 an einer der Haltewangen 18, 20 an, was dazu führt, dass es bereits bei vergleichsweise geringen seitlichen Schwenkwinkeln zu einem unerwünschten Kontakt des Unterlenkerfanghakens 14 mit der vorliegend angrenzenden Haltewange 18 kommt. Beispielsgemäß ist dies bei einem Schwenkwinkel von 4° der Fall.

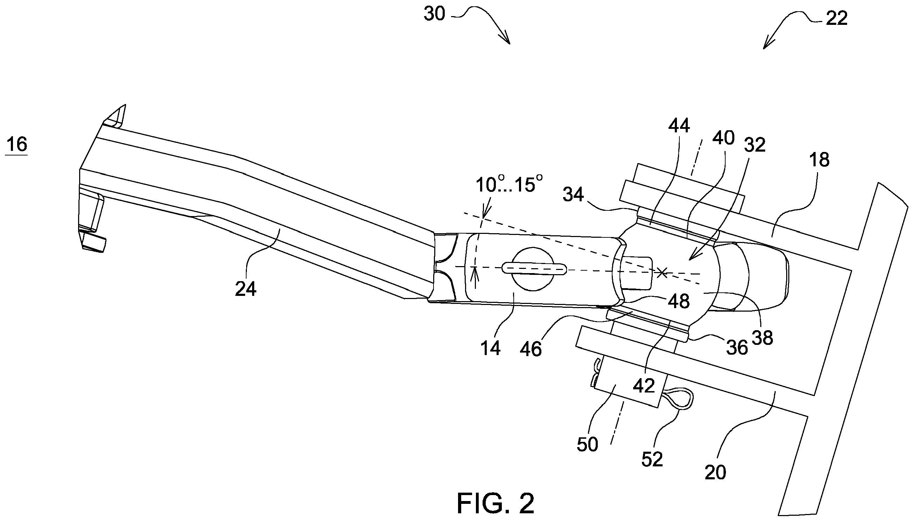

Fig. 2 zeigt eine bespielhafte Ausführungsform der erfindungsgemäßen Kupplungseinrichtung.

Die Kupplungseinrichtung 30 unterscheidet sich von der in Fig. 1 dargestellten Ausführungsform hinsichtlich der Ausgestaltung der Kupplungskugel 32. Demgemäß sind an gegenüberliegenden Seiten der Kupplungskugel 32 verlaufende Abstandsflansche 34, 36 ausgebildet, die die Kupplungskugel 32 bzw. einen von dieser umfassten Kugelkörper 38 in Abstand zu den Haltewangen 18, 20 halten. Die Abstandsflansche 34, 36 sind an der Kupplungskugel 32 fest angebracht. Genauer gesagt sind diese integraler Bestandteil der aus einer geeigneten Stahllegierung bestehenden sowie als einstückiges Drehteil hergestellten Kupplungskugel 32. Abweichend davon ist auch eine mehrteilige Fertigung möglich, bei der die beiden Abstandsflansche 34, 36 als separate Teile auf dem Kugelkörper 38 aufgeschweißt werden, wozu diese jeweils in Gestalt eines an der Kupplungskugel 32 umlaufenden ringförmigen Bunds ausgebildet sind.

Die Abstandsflansche 34, 36 sind in einem der Kupplungskugel 32 zugewandten Bereich 40, 42 umlaufend verjüngt oder ausgespart. Der Bereich 40, 42 ist als umlaufende Einkerbung oder Nut 44, 46 ausgeformt, in die eine angrenzende Außenkontur 48 des Unterlenkerfanghakens 14 bei Ausführung von zur Seite hin gerichteten Schwenkbewegungen des Unterlenkers 24 einzugreifen vermag.

Um einen verschleißbedingten Austausch der Kupplungskugel 32 zu ermöglichen, ist diese lösbar mittels eines abnehmbaren Montagebolzens 50 an den Haltewangen 18, 20 befestigt. Hierzu weisen die Haltewangen 18, 20 sowie die Kupplungskugel 32 miteinander fluchtende Montagebohrungen auf, durch den sich der mittels eines zugehörigen Splints 52 gesicherte Montagebolzen 50 erstreckt.

Je nach Kategorie des Dreipunkt-Geräteanbaus 16 nimmt jeder der Abstandsflansche 34, 36 zwischen den Haltewangen 18, 20 eine Einbaubreite von 10 bis 15 mm in Anspruch. Im Ergebnis führt dies zu einem gegenüber der Verwendung einer herkömmlichen Kupplungskugel 12 (siehe Fig. 1) um etwa 15° vergrößerten Schwenkwinkelbereich des Unterlenkerkupplers 14 und damit des Unterlenkers 24.

Beispielsgemäß stimmt die von der Kupplungskugel 32 zwischen den Haltewangen 18, 20 insgesamt beanspruchte Einbaubreite mit dem Abstand der beiden Haltewangen 18, 20 zueinander überein, sodass die Kupplungskugel 32 im Wesentlichen spielfrei, bevorzugt mittig zwischen den beiden Haltewangen 18, 20 zentriert wird. In letzterem Fall werden die Abstandsflansche 34, 36 derart bemessen, dass diese auf beiden Seiten des Kugelkörpers 38 jeweils dieselbe Einbaubreite zwischen den beiden Haltewangen 18, 20 in Anspruch nehmen.

## Patentansprüche

1. Kupplungseinrichtung für ein landwirtschaftliches Anbaugerät, mit einer Kupplungskugel (32) zur Aufnahme in einem Unterlenkerkupplers (14) eines Dreipunkt-Geräteanbaus (16), wobei die Kupplungskugel (32) innerhalb gegenüberliegender Haltewangen (18, 20) einer unteren Anbaugerätekupplung (22) befestigt ist, **dadurch gekennzeichnet, dass** an gegenüberliegenden Seiten der Kupplungskugel (32) verlaufende Abstandsflansche (34, 36) ausgebildet sind, die die Kupplungskugel (32) in Abstand zu den Haltewangen (18, 20) halten.

2. Kupplungseinrichtung nach Anspruch 1, **dadurch gekennzeichnet, dass** die Abstandsflansche (34, 36) an der Kupplungskugel (32) fest angebracht sind.

3. Kupplungseinrichtung nach Anspruch 1 oder 2, **dadurch gekennzeichnet, dass** die Abstandsflansche (34, 36) jeweils in Gestalt eines an der Kupplungskugel (32) umlaufenden ringförmigen Bunds ausgebildet sind.

4. Kupplungseinrichtung nach wenigstens einem der Ansprüche 1 bis 3, **dadurch gekennzeichnet, dass** die Abstandsflansche (34, 36) in einem der Kupplungskugel (32) zugewandten Bereich (40, 42) umlaufend verjüngt oder ausgespart sind.

5. Kupplungseinrichtung nach wenigstens einem der Ansprüche 1 bis 4, **dadurch gekennzeichnet, dass** die Kupplungskugel (32) lösbar mittels eines abnehmbaren Montagebolzens (50) an den Haltewangen (18, 20) befestigt ist.

6. Kupplungseinrichtung nach wenigstens einem der Ansprüche 1 bis 5, **dadurch gekennzeichnet, dass** die Abstandsflansche (34, 36) zwischen den Haltewangen (18, 20) jeweils eine Einbaubreite von zumindest 10 bis 15 mm in Anspruch nehmen.

7. Kupplungseinrichtung nach wenigstens einem der Ansprüche 1 bis 6, **dadurch gekennzeichnet, dass** die von der Kupplungskugel (32) zwischen den Haltewangen (18, 20) insgesamt beanspruchte Einbaubreite mit dem Abstand der beiden Haltewangen (18, 20) zueinander übereinstimmt.

## Claims

1. Coupling device for an agricultural attachment, having a coupling ball (32) to be received in a lower link coupler (14) of a three-point hitch (16), wherein the coupling ball (32) is fastened within opposite retaining plates (18, 20) of a lower attachment coupling (22), **characterized in that** spacer flanges (34, 36) that extend on opposite sides of the coupling ball (32) are formed, which keep the coupling ball (32) at a distance from the retaining plates (18, 20).

2. Coupling device according to Claim 1, **characterized in that** the spacer flanges (34, 36) are firmly attached to the coupling ball (32).

3. Coupling device according to Claim 1 or 2, **characterized in that** the spacer flanges (34, 36) are each in the form of an annular collar encircling the coupling ball (32).

4. Coupling device according to at least one of Claims 1 to 3, **characterized in that** the spacer flanges (34, 36) are narrowed or recessed circumferentially in a region (40, 42) facing the coupling ball (32).

5. Coupling device according to at least one of Claims 1 to 4, **characterized in that** the coupling ball (32) is releasably fastened to the retaining plates (18, 20) by means of a removable mounting bolt (50).

6. Coupling device according to at least one of Claims 1 to 5, **characterized in that** the spacer flanges (34, 36) between the retaining plates (18, 20) each take up an installation width of at least 10 to 15 mm.

7. Coupling device according to at least one of Claims 1 to 6, **characterized in that** the installation width taken up as a whole by the coupling ball (32) between the retaining plates (18, 20) corresponds to the spacing of the two retaining plates (18, 20) from one another.

## Revendications

1. Dispositif d'accouplement pour un équipement accessoire agricole, comprenant une boule d'accouplement (32) destinée à être reçue dans un organe d'accouplement de bras inférieur (14) d'un attelage d'accessoire à trois points (16), la boule d'accouplement (32) étant fixée à l'intérieur de joues de retenue opposées (18, 20) d'un accouplement d'équipement accessoire (22), **caractérisé en ce que** des brides d'espacement (34, 36) s'étendant au niveau de côtés opposés de la boule d'accouplement (32) sont prévues, lesquelles retiennent la boule d'accouplement (32) à distance des joues de retenue (18, 20).

2. Dispositif d'accouplement selon la revendication 1, **caractérisé en ce que** les brides d'espacement (34, 36) sont montées fixement sur la boule d'accouplement (32).

3. Dispositif d'accouplement selon la revendication 1 ou 2, **caractérisé en ce que** les brides d'espacement (34, 36) sont réalisées à chaque fois sous la forme d'un épaulement annulaire sur la périphérie de la boule d'accouplement (32).

4. Dispositif d'accouplement selon au moins l'une des revendications 1 à 3, **caractérisé en ce que** les brides d'espacement (34, 36) sont rétrécies ou évidées sur la périphérie dans une région (40, 42) tournée vers la boule d'accouplement (32).

5. Dispositif d'accouplement selon au moins l'une des revendications 1 à 4, **caractérisé en ce que** la boule d'accouplement (32) est fixée de manière amovible aux joues de retenue (18, 20) au moyen d'un boulon de montage amovible (50).

6. Dispositif d'accouplement selon au moins l'une des revendications 1 à 5, **caractérisé en ce que** les brides d'espacement (34, 36) prévoient entre les joues de retenue (18, 20) à chaque fois une largeur d'installation d'au moins 10 à 15 mm.

7. Dispositif d'accouplement selon au moins l'une des revendications 1 à 6, **caractérisé en ce que** la largeur d'installation requise au total par la boule d'accouplement (32) entre les joues de retenue (18, 20) correspond à la distance entre les deux joues de retenue (18, 20).
